# EUROPÄISCHE PATENTANMELDUNG

(11) **EP 2 902 153 A1**
(43) Veröffentlichungstag der Anmeldung: **05.08.2015**
(21) Anmeldenummer: 14153362.0
(22) Anmeldetag: 31.01.2014
(51) Int. Cl.: B25B 27/10, B21D 39/04

(54) **Zange**

(71) Anmelder: Georg Fischer JRG AG, 4450 Sissach (CH)
(72) Erfinder: Bürli, Stephan, 4402 Frenkendorf (CH); Knörnschild, Thomas, 4153 Reinach (CH); Fohrler, Marco, 4494 Oltingen (CH)
(74) Vertreter: Fenner, Seraina

(57) **Zusammenfassung**

Zange (1) zur Montage einer Klemmverbindung für Rohre mit einem Rohr beinhaltend ein Gehäuse (2) bestehend aus zwei Gehäusehalbschalen (3) mit jeweils einem Klemmbereich (13) und einem Griff (12), Schiebebüchsen (4, 5), wobei die Schiebebüchsen, jeweils aus zwei Halbschalen bestehen, eine Klemmhülse (6), wobei die Klemmhülse aus zwei Halbschalen besteht, mindestens zwei Steuersegmente (7), wobei die Klemmhülse (6), die Steuersegmente und die Schiebebüchsen (4, 5) im Klemmbereich (13) des Gehäuses (2) angeordnet sind, einen Spannbolzen (8) und Pleuel (10), wobei die Pleuel, die Steuersegmente (7) und der Spannbolzen miteinander verbunden sind, wobei das Steuersegment (7) eine Steuerkurve (11) aufweist, wobei die Steuerkurve die Hubbewegung des Spannbolzens (8) in eine Schiebehubbewegung der Schiebebüchsen (4, 5) umleitet.

## Beschreibung

Die Erfindung betrifft eine Zange zur Montage einer Klemmverbindung für Rohre mit einem Rohr beinhaltend ein Gehäuse bestehend aus zwei Gehäusehalbschalen mit jeweils einem Klemmbereich und einem Griff, Schiebebüchsen, wobei die Schieberbüchsen jeweils aus zwei Halbschalen bestehen, eine Klemmhülse, wobei die Klemmhülse aus zwei Halbschalen besteht, mindestens zwei Steuersegmente, wobei die Klemmhülse, das Steuersegment und die Schiebebüchsen im Klemmbereich des Gehäuses angeordnet sind, einen Spannbolzen und Pleuel, wobei die Pleuel, die Steuersegmente und der Spannbolzen miteinander verbunden sind.

Klemmverbindungen für den Anschluss von Kunststoffrohren sind aus dem Stand der Technik bekannt und werden meist in der Heizung-und Sanitärinstallation eingesetzt. Der Aufbau solcher Klemmverbindungen ist unterschiedlich, weshalb die Montagewerkzeuge bzw. ihre Funktion entsprechend unterschiedlich sind. Durch das Einsatzgebiet dieser Klemmverbindungen sind in der Regel entsprechend viele solcher Klemmverbindungen zu montieren, weshalb es ein einfaches und kompaktes Werkzeug erfordert, das eine Montage einer Klemmverbindung einfach und schnell durchführen lässt.

Ein Montagewerkzeug das zur Montage von ähnlichen Klemmverbindungen an Kunststoffrohren eingesetzt wird, ist in der DE 102008 051 284 offenbart, wobei die anzuschliessende Klemmverbindung vorab einer Aufweitung des anzuschliessenden Rohres bedingt und das wiederum unterschiedliche Anforderungen an das Montagewerkzeug stellt.

Es ist Aufgabe der vorliegenden Erfindung ein Werkzeug zum Anschliessen eines Kunststoffrohres an eine Klemmverbindung vorzuschlagen, bei welchem kein Aufweiten des Rohres von Nöten ist, mit dem alle zur Montage benötigten Schritte bzw. die komplette Montage der Klemmverbindung mit dem Rohr mittels nur eines Werkzeugs und nur einer Einspannung der Klemmverbindung und des Rohres im Werkzeug umgesetzt werden können.

Diese Aufgabe wird erfindungsgemäss dadurch gelöst, dass das Steuersegment eine Steuerkurve aufweist, wobei die Steuerkurve die Hubbewegung des Spannbolzens in eine Schiebhubbewegung der Schiebebüchsen umlenkt.

Die erfindungsgemässe Zange weist einen Spannbolzen auf, der durch einen Antrieb, wobei es sich um einen mechanischen, elektrischen oder auch hydraulischen wie auch pneumatischen Antrieb handeln kann und von Hand oder maschinell betätigtbar ist, angetrieben wird. Der Spannbolzen wird gegen eine Druckfeder, die den Spannbolzen in der Ausgangsposition hält in Richtung Klemmbereich der Zange geschoben bzw. gedrückt, dadurch wird eine Hubbewegung des Spannbolzens umgesetzt. Der Spannbolzen ist mittels einer Achse mit den Pleueln gelenkig verbunden. Die Pleuel wiederum sind mit den Steuersegmenten, welche in den jeweiligen Gehäusehalbschalen angeordnet sind, gelenkig verbunden. Die Einzelteile der erfindungsgemässen Zange sind meist spiegelsymmetrisch ausgebildet.

Mithilfe einer gelenkige Verbindung des Spannbolzens, der Pleuel und der Steuersegmente wird die Hubbewegung in eine Schiebehubbewegung der Schiebebüchsen umgeleitet. Die Schiebehubbewegung der Schiebebüchsen erfolgt rechtwinklig zur Hubbewegung des Spannbolzens. Dies wird durch den Steuerkurvenverlauf am Steuersegment erzielt. Der Verlauf der Steuerkurve ist derart ausgebildet, dass beim Hochschieben bzw. Rotieren der Steuersegmente durch die Pleuel, die Kurvenrollen, welche an den Schieberbüchsen angeordnet sind rechtwinklig zur Hubbewegung verschoben werden.

Die Zange weist im Klemmbereich zwei Schiebebüchsen auf, wobei die Schiebebüchsen teilweise ineinander angeordnet sind. Das heisst, es gibt eine äussere Schieberbüchse und eine innere Schieberbüchse. Diese Anordnung dient dazu, um die zu verbindende Klemmverbindung komplett oder aber nur die Klemmhülse der Klemmverbindung auf das anzuschliessende Rohr zu schieben. Das wiederum bedingt einer unterschiedlichen Schiebehubbewegung der Schiebebüchsen. Die Schiebehubbewegungen der Schiebebüchsen sind dementsprechend unterschiedlich lang. Das wird dadurch erreicht, dass die Steuerkurve zu Beginn des Vorgangs nur auf die Kurvenrollen der äusseren Schiebbüchse wirkt und die innere Schiebebüchse einfach von der äusseren Schiebebüchse mitgeschoben wird. Die innere Schiebebüchse wird so lange mitgeschoben bis der Verlauf der Steuerkurven sich derart ändert, dass die Kurvenrollen der äusseren Schiebebüchse keinen Vorschub mehr erhalten bzw. die Steuerkurven die Kurvenrollen nicht mehr voran schieben. Das hat zur Folge, dass nach dem Einschieben der Klemmverbindung in das anzuschliessende Rohr, was durch das Verschieben der äusseren Schiebebüchse erzielt wird, keine weitere Verschiebung der kompletten Klemmverbindung mehr erfolgt. Durch das anschliessende, blosse Verschieben der inneren Schiebebüchse wird nur noch die Klemmhülse der Klemmverbindung auf das Rohr geschoben um die ganze Verbindung fest zu klemmen.

An den Schiebebüchsen sind Kurvenrollen angeordnet, vorzugsweise an jeder Halbschale eine da die Zange in den meisten Teilen spiegelsymmetrisch aufgebaut ist.

Die erzeugte Kraft der Steuerkurven auf die Kurvenrollen schiebt die Schiebebüchse voran bzw. verursacht die Schiebhubbewegung.

Um ein einwandfreies Verfahren der Kurvenrollen entlang der Steuerkurven zu gewährleisten ist es Vorteilhaft, wenn neben der Kurvenrolle noch jeweils eine Stützrolle angeordnet ist, das vermeidet ein Verkanten der Kurvenrollen mit den Steuerkurven. Vorzugsweise laufen die Stützrollen entlang einer Nut in der Gehäusehalbschale, wodurch die Stützrollen abgestützt werden und die erzeugte Kraft des Steuersegments auf die Kurvenrollen abgefangen und auf die Stützrollen übertragen wird.

Die Zange weist vorzugsweise einen Lagerbock auf, auf dem das Gehäuse gelagert ist. Die Gehäusehalbschalen sind derart auf dem Lagerbock gelagert, dass durch die Betätigung der Griffe der Gehäusehalbschalen der Klemmbereich des Gehäuses geöffnet wird.

Vorzugsweise weist der Lagerbock einen Aufnahmebereich für den Antrieb der Zange auf. Eine bevorzugte Form der Aufnahme weist einen Bajonettverschluss zur schnellen und einfachen Befestigung des Antriebs mit der Zange auf.

Um die Zange vor Überlast zu schützen bzw. die Kurven-und Stützrollen sowie die Steuerkurve weist der Lagerbock einen Anschlag auf. Wenn die Klemmverbindung fertig montiert ist, ist der benötigte Hub zu Ende und die Achse mit der der Spannbolzen verbunden ist steht am Anschlag des Lagerbocks an.

Vorteilhaft ist es, wenn die Zange ein Sicherungselement aufweist um das Öffnen der Zange während des Montagevorgangs der Klemmverbindung auf das Rohr zu verhindern. Das Sicherungselement ist vorzugsweise als Spannklotz ausgebildet. Vorteilhaft ist es, wenn der Spannklotz an der Achse angeordnet ist, die den Spannbolzen mit den Pleueln gelenkig verbindet. Dadurch fährt der Spannklotz mit derselben Hubbewegung in die Richtung des Klemmbereichs der Zange und fährt zwischen der Spannflächen der Zange im Bereich des Griffs hoch, wodurch ein Betätigen der Griffe verunmöglicht wird.

In einer bevorzugten Ausgestaltung des Spannklotzes weist der Spannklotz unteranderem vier Rollen auf, die das Zentrieren zwischen den Spannflächen des Griffs des Gehäuses vereinfachen. Die Rollen, die dem Klemmbereich der Zange näher angeordnet sind weisen einen kleineren Durchmesser auf und ermöglichen so ein einfaches Einfahren zwischen die Spannflächen. Im weiteren Verlauf des Hubs kommen die unteren Rollen in Eingriff und drücken die Spannflächen bzw. die Griffe auseinander und den Klemmbereich des Gehäuses zusammen. Das verhindert ein ungewolltes Öffnen der Zange und klemmt das zu verbindende Rohr in der Zange fest bzw. in der Klemmhülse.

Ein Ausführungsbeispiel der Erfindung wird anhand der Figuren beschrieben, wobei sich die Erfindung nicht nur auf das Ausführungsbeispiel beschränkt. Es zeigen:
- Fig. 1a: eine 3D-Ansicht einer erfindungsgemässen Zange vor der Montage einer Klemmverbindung in geöffnetem Zustand,
- Fig. 1b: einen Teilschnitt der Seitenansicht einer erfindungsgemässen Zange vor der Montage einer Klemmverbindung in geöffnetem Zustand,
- Fig. 1c: einen Längsschnitt einer erfindungsgemässen Zange vor der Montage einer Klemmverbindung in geöffnetem Zustand,
- Fig. 2: einen Längsschnitt einer erfindungsgemässen Zange mit eingelegter Klemmverbindung und dem zu verbindendem Rohr vor der Durchführung des Montagevorgangs,
- Fig. 3a: eine Seitenansicht einer erfindungsgemässen Zange, wobei die Klemmverbindung bereits komplett in das Rohr eingeschoben ist, die Klemmhülse der Klemmverbindung aber noch nicht auf das Rohr geschoben ist,
- Fig. 3b: einen Teilschnitt der Seitenansicht einer erfindungsgemässen Zange, wobei die Klemmverbindung bereits komplett in das Rohr eingeschoben ist, die Klemmhülse der Klemmverbindung aber noch nicht auf das Rohr geschoben ist,
- Fig. 3c: einen Teilschnitt einer erfindungsgemässen Zange, wobei die Klemmverbindung bereits komplett in das Rohr eingeschoben ist, die Klemmhülse der Klemmverbindung aber noch nicht auf das Rohr geschoben ist,
- Fig. 4a: eine Seitenansicht einer erfindungsgemässen Zange, wobei die Klemmverbindung bereits komplett montiert ist,
- Fig. 4b: einen Längsschnitt einer erfindungsgemässen Zange, wobei die Klemmverbindung bereits komplett montiert ist,
- Fig. 5a: eine Seitenansicht einer erfindungsgemässen Zange wobei die Klemmverbindung komplett montiert ist und die Zange wieder in die Ausgangsposition zurückgefahren ist,
- Fig. 5b: eine Schnittansicht einer erfindungsgemässen Zange, wobei die Klemmverbindung komplett montiert ist und die Zange wieder in die Ausgangsposition zurückgefahren ist und
- Fig. 6: eine 3D-Ansicht einer erfindungsgemässen Zange, wobei die Klemmverbindung komplett montiert ist und die Zange geöffnet wurde.

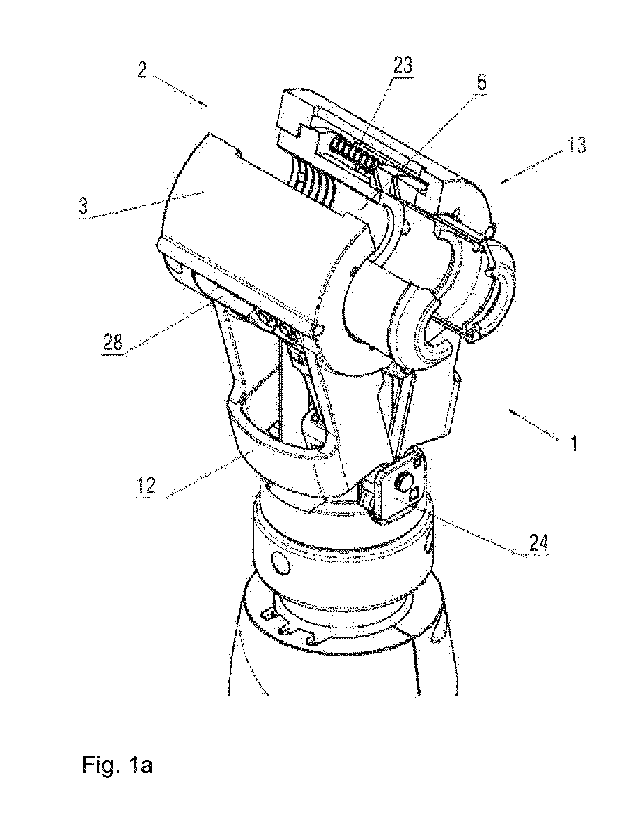

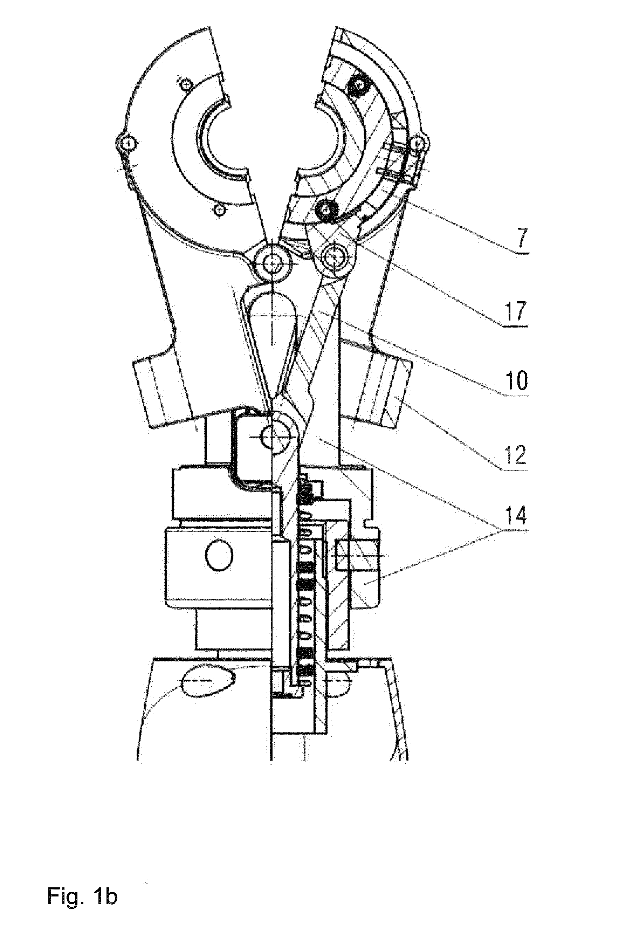

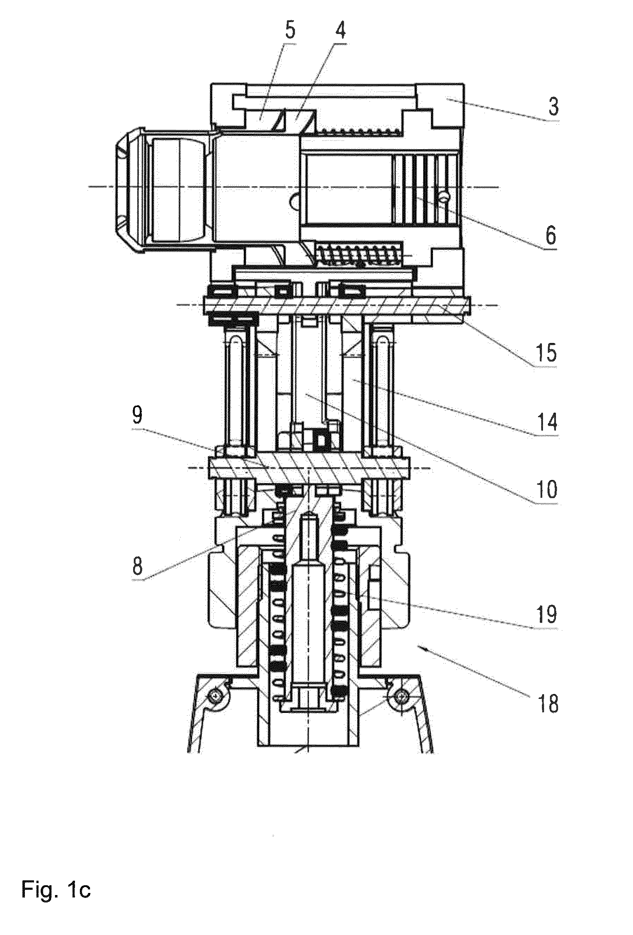

Fig. 1a - c zeigen eine erfindungsgemässe Zange 1 vor der Montage einer Klemmverbindung mit einem zu verbindenden Rohr. Das Gehäuse 2, welches aus zwei Gehäusehalbschalen 3 gebildet wird ist in geöffnetem Zustand dargestellt um die zu verbindende Klemmverbindung und das Rohr einzulegen. Dazu werden die Griffe 12 gegeneinander gedrückt und der Klemmbereich 13 des Gehäuses 2 öffnet sich. Das Gehäuse 2 wird auf dem Lagerbock 14 gelagert. Mittels der Achse 15 werden die beiden Gehäusehalbschalen 3 am Lagerbock 14 befestigt, wobei die Achse 15 auch als Drehpunkt der Gehäusehalbschalen 3 fungiert. Damit das Gehäuse 2 im nicht betätigten Zustand geschlossen ist, bzw. die Zange 1 geschlossen ist, sind Druckfedern 16 im Lagerbock 14 angeordnet, welche auf das Gehäuse 2 drücken und dadurch den Klemmberiech 13 des Gehäuses mit einem geringen Druck geschlossen halten. Im Klemmbereich des Gehäuses 2 ist eine Klemmhülse 6 angeordnet, wobei diese aus zwei Halbschalen gebildet wird und jeweils in den Gehäusehalbschalen 3 angeordnet und fest mit ihnen 3 verschraubt sind. Des Weiteren sind zwei Schiebebüchsen 4, 5 im Klemmbereich 13 des Gehäuses angeordnet. Die Schiebebüchsen 4, 5 werden ebenfalls durch jeweils zwei Halbschalen gebildet und sind in den Gehäusehalbschalen 3 angeordnet. Die Schiebebüchsen 4, 5 sind ineinander angeordnet, das heisst, die äussere Schiebebüchse 5 dient dem Einschieben der kompletten Klemmverbindung in das Rohr und nimmt anfangs die innere Schiebebüchse 4 mit, welche dem abschliessenden Aufschieben der Klemmhülse der Klemmverbindung dient. Der genaue Ablauf des Vorgangs wir noch ausführlich erläutert werden. Die Schiebebüchsen 4, 5 werden am Innendurchmesser durch die Klemmhülse 6 geführt bzw. die innere Schiebebüchse 4 wobei diese wiederum die äussere Schiebebüchse 5 führt. Zudem ist in den Gehäusehalbschalen 3 jeweils ein Steuersegment 7 angeordnet, welches eine Steuerkurve 11 aufweist. Das Steuersegment 7 befindet sich zwischen dem Innendurchmesser der Gehäusehalbschalen 3 und dem äusseren Durchmesser der Schiebebüchsen 4, 5 und der Klemmhülse 6 bzw. das Steuersegment 7 ist in einem Ringspalt angeordnet, der durch die Schiebebüchsen 4, 5 und Gehäusehalbschalen 3 gebildet wird. Das Steuersegment 7 lässt sich in einem gewissen Bereich entlang des inneren Umfangs der Gehäusehalbschalen 3 rotieren. Die Steuersegmente 7 weisen am Aussenumfang eine Lasche 17 auf, die der Verbindung mit den Pleueln 9 dient, welche die Verbindung mit dem Spannbolzen 8 herstellen. Der Lagerbock 14 dient aber auch dem Anschliessen eines Antriebs 30, wobei ein solcher mechanisch, elektrisch oder auch hydraulisch umgesetzt werden kann. Der Lagerbock 14 weist einen entsprechenden Aufnahmebereich 18 auf um den Antrieb 30 anzuschliessen, welcher dann entsprechend auf den Spannbolzen 8 wirkt, der durch eine Druckfeder 19 in die Ausgangsstellung gebracht bzw. gehalten wird. Vorzugsweise weist der Aufnahmebereich 18 einen Bajonettverschluss auf wodurch das Anschliessen des Antriebs 30 an die Zange 1 schnell und einfach umsetzbar ist.

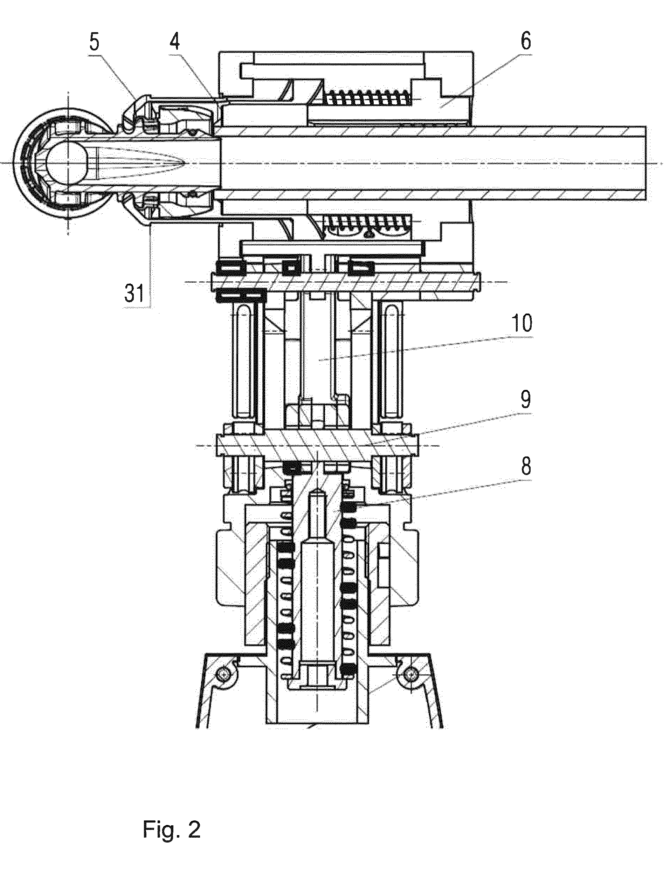

Die Zange 1 wie sie in den Fig. 1a-c dargestellt ist, ist bereit für das Einlegen der Klemmverbindung und des anzuschliessenden Rohres. In Fig. 2 sind die zu verbindenden Teile bereits in den Klemmbereich 19 des Gehäuses 2 der Zange1 eingelegt, wobei als Klemmverbindung ein T-Stück gezeigt wird. In der Schnittansicht der Fig. 2 sind die eingelegten Teile gut erkennbar. Wobei auch gut ersichtlich ist, dass die äussere Schiebebüchse 5 die komplette Klemmverbindung umfasst bzw. eine Schulter des Nippels umgreift und dadurch die komplette Klemmverbindung in die Richtung des eingelegten Rohres bzw. in das eingelegte Rohr verschoben werden kann. Die innere Schiebebüchse 4 hingegen umgreift nur die Klemmhülse der Klemmverbindung und kann dadurch separat noch weiter verschoben werden. Das Gehäuse 2 schliesst sich mit Hilfe der erwähnten Federn 16 sobald die Griffe 12 nicht mehr betätigt werden und es wird ein leichter Druck auf die eingelegten Teile ausgeübt. Nach dem Einlegen der Teile wird der Antrieb 30 betätigt, das heisst ein Kolben wirkt auf den Spannbolzen 8 und drückt diesen gegen die Druckfeder 19 hoch. Der Spannbolzen 8 ist verbunden mit den Pleueln 10, welche auf der Achse 9 gelagert sind. Durch den Hub des Spannbolzens 8 verschiebt sich die Achse 9 in die Richtung des Klemmbereichs 13 der Zange 1, wodurch die Pleuel 10 auf die Steuersegmente 7 wirken. Die Steuersegmente 7 werden entsprechend im Gehäuse 2 entlang des Innenumfangs hochgeschoben bzw. rotiert.

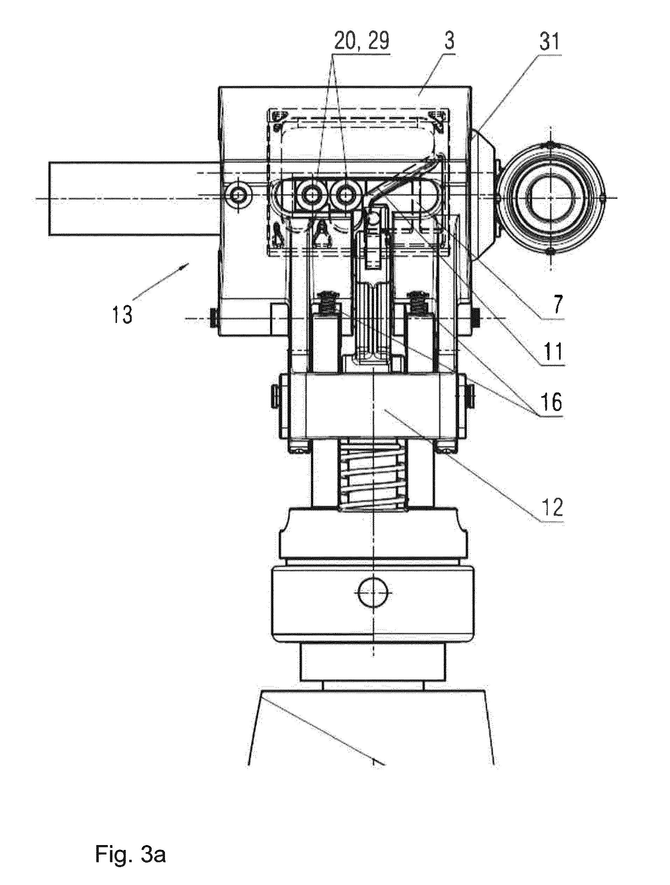

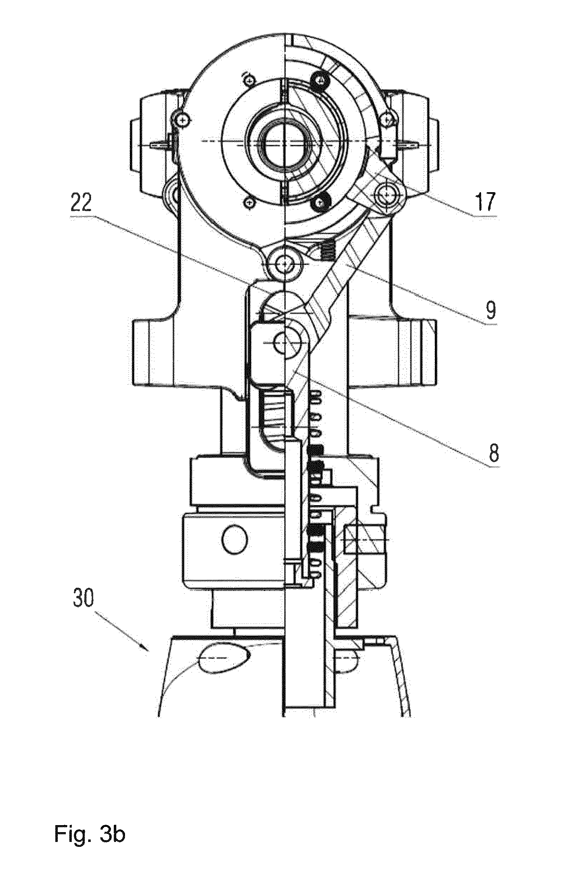

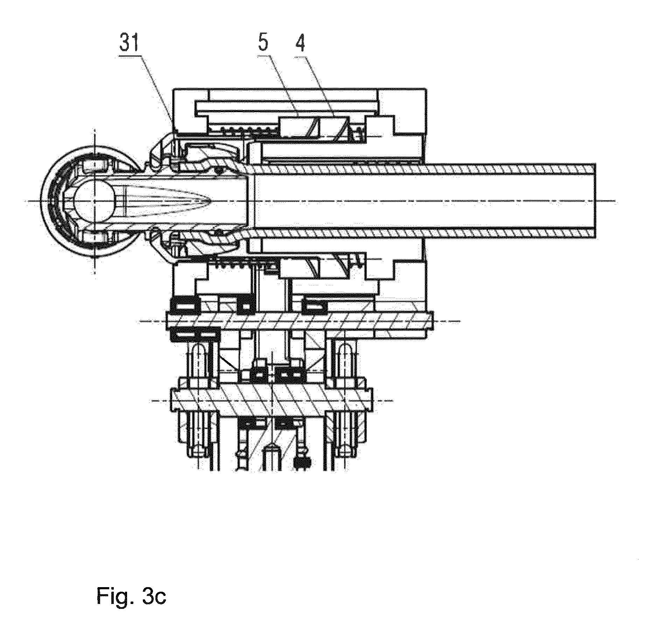

In Fig. 3b ist ein hochgefahrener Pleuel 10 gut ersichtlich. Die Steuersegmente 7 weisen eine Steuerkurve 11 auf. Durch die Hubbewegung des Spannbolzens 8 auf die Pleuel 10 rotieren die Steuersegmente 7 derart, dass die an den Steuersegmenten 7 angeordnete Steuerkurve 11 die Kurvenrollen 20 an den Schiebebüchsen 4, 5 verschieben. Die Schiebebüchsen 4, 5 weisen an ihrem Aussenumfang Kurvenrollen 20 auf, welche entlang der Steuerkurve 11 laufen. Das bedeutet also, beim Rotieren der Steuersegmente 7 drücken die Steuerkurven 11, es ist von mehreren die Rede da die Kurven 11 bzw. die Steuersegmente 7spiegelsymmetrische in den beiden Gehäusehalbschalen 3 angeordnet sind, auf die Kurvenrollen 20 und treiben diese in die entsprechende Richtung. In diesem Fall sind die Steuerkurven 11 derart ausgebildet, dass sie die Kurvenrollen 20 rechtwinklig zur Hubbewegung des Spannbolzens 8 verschieben und dadurch auch die Schiebebüchsen 4, 5 in diese Richtung schieben, wodurch die Klemmverbindung in das Rohr geschoben wird, welches durch die Klemmhülse 6 fixiert ist. Die Steuerkurve 11 ist derart ausgebildet, dass die Schiebebüchsen 4, 5 unterschiedlich weit geschoben werden. Jede der Schiebbüchsen 4, 5 weist eine Kurvenrolle 20 bzw. zwei Kurvenrollen 20 da beidseitig angeordnet, auf. Nun drückt die Steuerkurve 11 zuerst auf die Kurvenrolle 20 der äusseren Schiebbüchse 5 und die innere Schiebebüchse 4 wird wie bereits erwähnt nur mitgeschoben, wodurch die komplette Klemmverbindung in das anzuschliessende Rohr geschoben wird. Erreicht nun die Kurvenrolle 20 der äusseren Schiebebüchse 5 einen bestimmten Punkt auf der Steuerkurve 11, nämlich den, dass sie nicht mehr weitergeschoben wird, da die Kurvenrolle 20 der äusseren Schiebbüchse 5 von der Steuerkurve 11 keine Vorschubskraft mehr erhält, was aus dem Kurvenverlauf in Fig. 3a ersichtlich ist, wird die Klemmverbindung nicht mehr weiter in das Rohr hineingeschoben. Das ist ersichtlich aus Fig. 3a, da sich der Kurvenverlauf nur noch rechtwinklig zur Schieberichtung der Schiebbüchsen 4,5 erstreckt und keine Komponente mehr aufweist, die die Kurvenrollen 20 der äusseren Schiebebüchse 5 vorantreiben würde. Zudem weist die äussere Schiebebüchse 5 eine Schulter 21 auf, die als Anschlag dient damit sich die äussere Schiebebüchse 5 nicht weiter verschiebt. Ab dann wird nur noch die innere Schiebbüchse 4 mithilfe ihrer Kurvenrollen 20 und dem entsprechenden Kurvenverlauf der Steuerkurve 11 weiter geschoben um die Klemmhülse der Klemmverbindung noch auf das Rohr zu schieben.

Das einzelne voranschieben der inneren Schiebbüchse 4 ist dadurch möglich, dass der Steuerkurvenverlauf der Steuerkurven 11 derart ausgebildet ist, dass nur noch die Kurvenrollen 20 der inneren Schiebebüchse 4 vorangerieben werden. Das wird dadurch erreicht, dass an der Position der Kurvenrollen 20 der inneren Schiebebüchse 4 zum Zeitpunkt bei dem die Klemmverbindung genügend weit in das Rohr geschoben ist und die Kurvenrollen 20 der äusseren Schiebebüchse 5 keine Vorschubbewegung mehr erhalten, eine Art Nase im Kurvenverlauf der Steuerkurve 11 auftritt, ersichtlich in Fig. 3a, die nur noch einen Einfluss auf die Kurvenrolle 20 der inneren Schiebebüchse 4 hat und nur noch dies voranschiebt.

Beim Erreichen der Endposition der Steuerkurve 11 ist die Klemmverbindung mit dem Rohr fertig montiert.

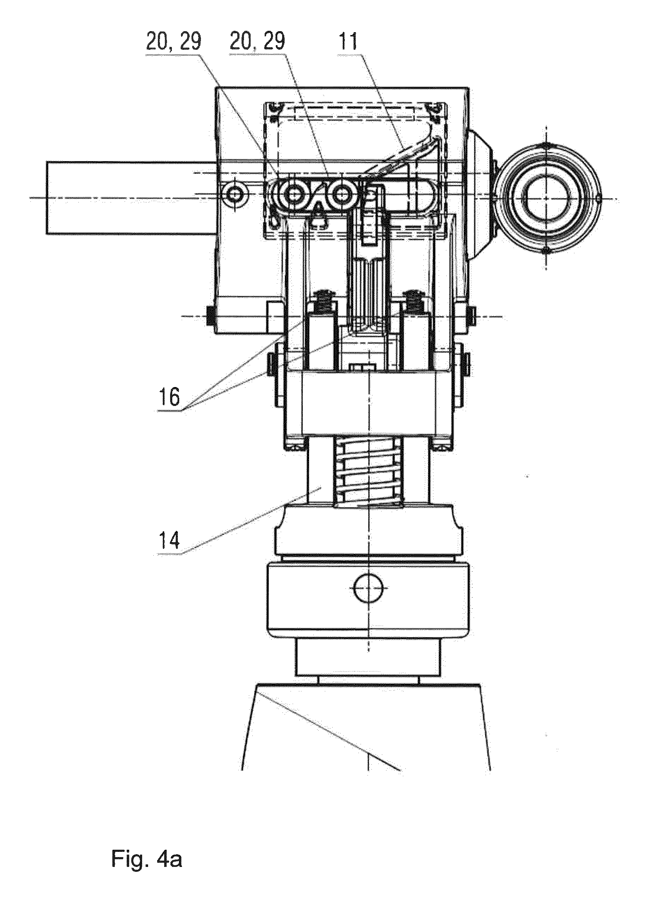

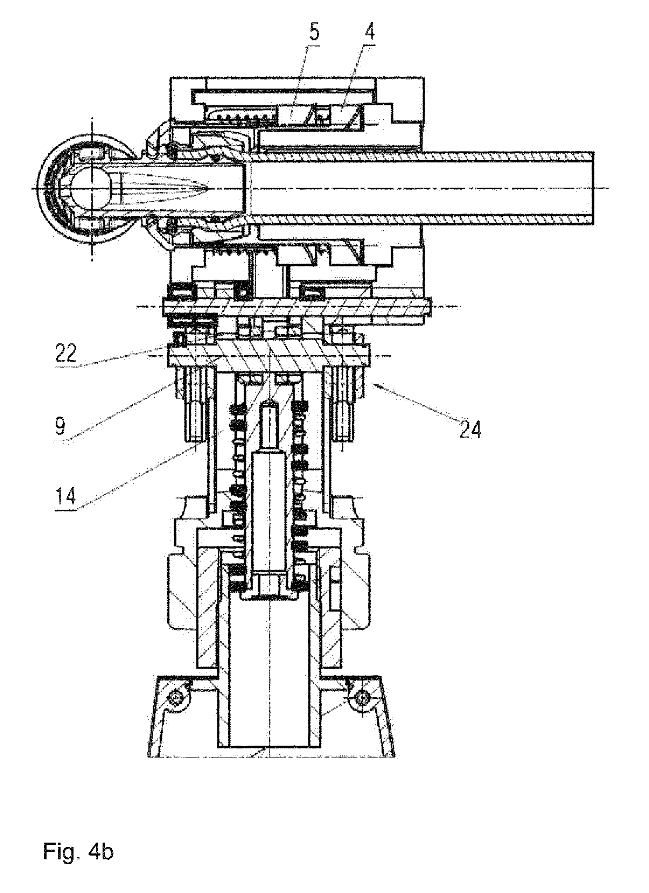

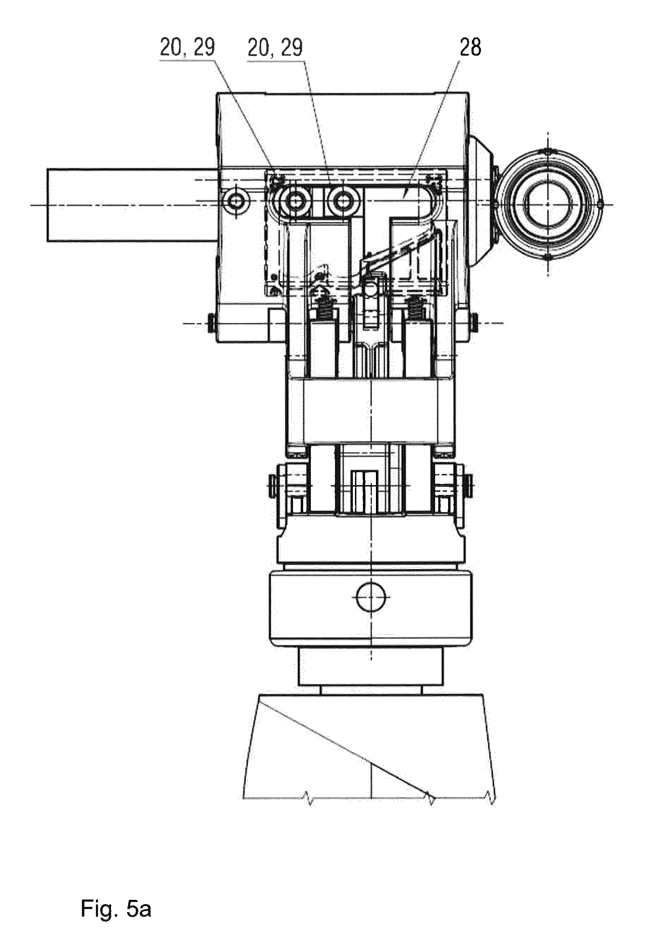

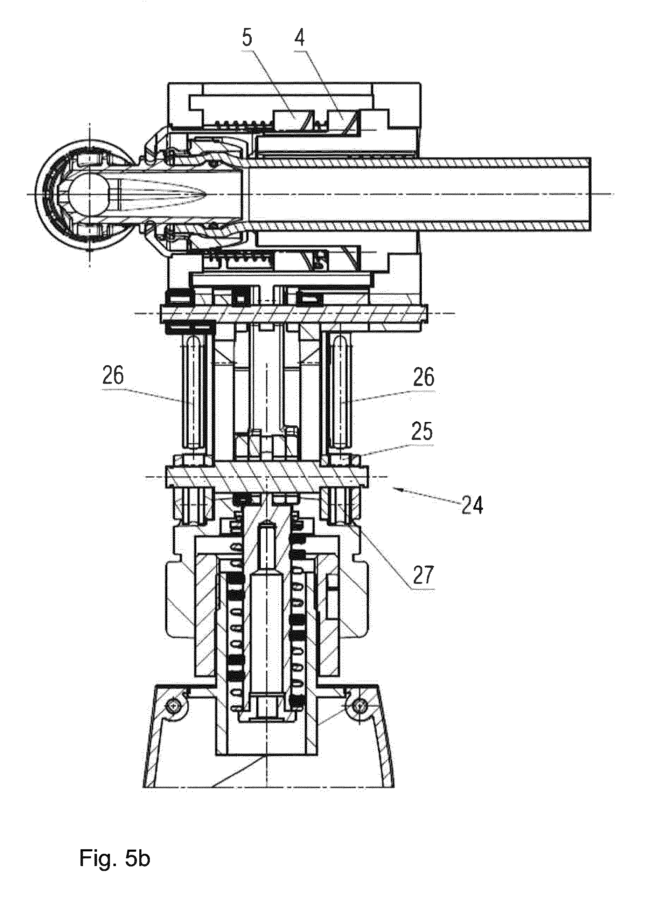

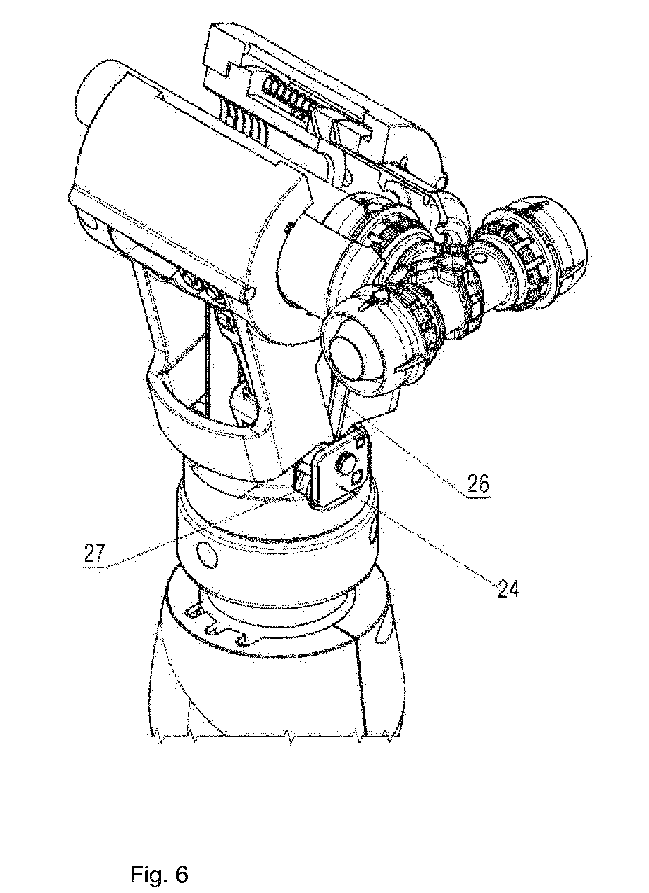

Ein Anschlag 22, welcher im Lagerbock 14 angeordnet ist, dient der Hubbegrenzung, wodurch vermieden werden kann, dass die komplette Antriebskraft auf die Kurvenrollen 20 in der Endposition drückt, da der Kraftbegrenzer im Antrieb dadurch bemerkt, dass er die Endposition erreicht hat. Mit dem Anschlag 22 am Lagerbock 14, wie in Fig. 4b dargestellt, schlägt die Achse 9 am Anschlag 22 an, der als Hubbegrenzer dient. Daraufhin geht der Kolben des Antriebs (nicht dargestellt) zurück und der Spannbolzen 8 wird durch die Druckfeder 19 ebenfalls wieder in die Ausgangsposition gefahren. Die Pleuel 10 und die Steuersegmente 7 bewegen sich auch entsprechend zurück in ihre Ausgangsposition, was aus den Fig. 5a und b ersichtlich ist. Da die fertig montierte Klemmverbindung mit dem Rohr sich noch im Klemmbereich 13 der Zange 1 befindet und das Rohr durch die Klemmhülse 6 festgehalten wird, können sich die Schiebebüchsen 4, 5 in denen die Klemmverbindung eingelegt ist nicht an ihre Ausgangsposition bewegen. Zudem wird auf die Gehäusehalbschalen 3 durch die Federn 16 ein leichter Druck ausgeübt, der das Gehäuse 2 geschlossen hält, solange die Griffe 12 nicht betätigt werden. Wird nun durch Betätigen der Griffe 12 das Gehäuse geöffnet, was aber nur möglich ist wenn der Spannbolzen 8 sich wieder in der Ausgangsposition befindet, kann sich das Rohr aus der Klemmhülse 6 lösen und die Schiebebüchsen 4, 5 werden durch die Federn 23 wieder in die Ausgangsposition gedrückt. Das fertig montierte Rohr mit der Klemmverbindung kann dann aus der Zange genommen werden, was in Fig. 6 gezeigt wird. Damit beim ganzen Vorgang des Montierens einer Klemmverbindung mit einem Rohr sich die Gehäusehalbschalen 3 nicht öffnen, weist die Zange 1 ein Sicherungselement auf das vorzugsweise als Spannklotz 24 ausgebildet ist. Der Spannklotz 24, gut ersichtlich in Fig. 1a, ist vorzugsweise an den beiden Enden der Achse 9 angeordnet, wodurch er denselben Hub ausführt wie die Achse 9 bzw. der Spannbolzen 8. Der Spannklotz 24 verfährt zwischen den beiden Gehäusehalbschalen 3 im Bereich der Griffe 12, wodurch das Öffnen des Gehäuses 2 durch betätigen der Griffe 12 nicht möglich ist. Der Spannklotz 24 dient dadurch als Sicherungselement. Der Spannklotz 24 weist vorzugsweise zwei kleine Rollen 25 auf, die so angeordnet sind, dass die Spannflächen 26 der Gehäusehalbschalen 3 einfach zentriert werden und das Einfahren des Spannklotzes 24 zwischen die Spannflächen 26 einfach erfolgen kann. Zudem weist der Spannklotz 24 noch zwei etwas grössere Rollen 27 auf, die den Klemmbereich 13 des Gehäuses zusammenpressen indem sie die Spannflächen 26 noch weiter auseinanderdrücken. Zur besseren Stabilisierung der Rollen 27, auf die die Spannflächen 26 drücken, berühren sich die Rollen 27 gegenseitig und stützen sich dadurch gegenseitig ab. Damit ein einfaches Zentrieren möglich ist, fahren die kleineren Rollen 25 zuerst zwischen die Spannflächen 26 und bei fortschreitender Hubbewegung greifen die grösseren Rollen 27 zwischen den Spannflächen 26 ein.

Eine weitere Vorteilhafte Ausgestaltung dieser Zange 1 besteht darin, dass neben den Kurvenrollen 20 noch Stützrollen 29 angeordnet sind. Es weist also jede Halbschale der Schiebebüchsen 4, 5 neben der Kurvenrolle 20 noch eine Stützrolle 29 auf. Die Stützrolle 29 ist vorzugsweise gleich ausgebildet wie die Kurvenrolle 20 und ist direkt daneben angeordnet. Die Kurvenrolle 20 befindet sich also zwischen Aussendurchmesser der entsprechenden Schiebebüchse 4, 5 und der Stützrolle 29. Die Stützrolle 29 dient der zusätzlichen Abstützung um Verkantungen zu vermeiden. Die Stützrolle 29 läuft vorzugsweise in einer Nut 28, welche in den Gehäusehalbschalen 3 angeordnet ist. Durch die Kraft, die durch die Steuerkurve 11 auf die Kurvenrollen 20 ausgeübt wird, tendiert die Kurvenrolle 20 dazu sich mit dem Steuersegment 7 zu verkanten. Durch die Stützrollen 29 werden die Schiebebüchsen 4, 5 nochmals gelagert, dass auch durch die Krafteinwirkung der Steuerkurve 11 kein Verkanten mehr auftreten kann da die Stützrolle 29 einen Teil der Kraft aufnimmt und mit der Anordnung in der Nut 28 in den Gehäusehalbschalen 3 abgestützt wird.

### Bezugszeichenliste

- 1: Zange
- 2: Gehäuse
- 3: Gehäusehalbschale
- 4: Schiebebüchse innen
- 5: Schiebebüchse aussen
- 6: Klemmhülse
- 7: Steuersegment
- 8: Spannbolzen
- 9: Achse
- 10: Pleuel
- 11: Steuerkurve
- 12: Griff Gehäuse
- 13: Klemmbereich Gehäuse
- 14: Lagerbock
- 15: Achse
- 16: Feder
- 17: Lasche
- 18: Aufnahmebereich
- 19: Druckfeder
- 20: Kurvenrolle
- 21: Schulter
- 22: Anschlag
- 23: Feder
- 24: Sicherungselement, Spannklotz
- 25: Kleine Rolle
- 26: Spannfläche
- 27: Grosse Rolle
- 28: Nut
- 29: Stützrolle
- 30: Antrieb
- 31: Anschlag

## Patentansprüche

1. Zange (1) zur Montage einer Klemmverbindung für Rohre mit einem Rohr beinhaltend ein Gehäuse (2) bestehend aus zwei Gehäusehalbschalen (3) mit jeweils einem Klemmbereich (13) und einem Griff (12), Schiebebüchsen (4, 5), wobei die Schiebebüchsen (4, 5) jeweils aus zwei Halbschalen bestehen, eine Klemmhülse (6), wobei die Klemmhülse (6) aus zwei Halbschalen besteht, mindestens zwei Steuersegmente (7), wobei die Klemmhülse (6), die Steuersegmente (7) und die Schiebebüchsen (4, 5) im Klemmbereich (13) des Gehäuses (2) angeordnet sind, einen Spannbolzen (8) und Pleuel (10), wobei die Pleuel (10), die Steuersegmente (7) und der Spannbolzen (8) miteinander verbunden sind, **dadurch gekennzeichnet, dass** das Steuersegment (7) eine Steuerkurve (11) aufweist, wobei die Steuerkurve (11) die Hubbewegung des Spannbolzens (8) in eine Schiebehubbewegung der Schiebebüchsen (4, 5) umleitet.

2. Zange (1) nach Anspruch 1, **dadurch gekennzeichnet, dass** die Zange zwei Schiebebüchsen (4, 5) aufweist, wobei die Schiebebüchsen (4, 5) teilweise ineinander angeordnet sind.

3. Zange (1) nach einer der Ansprüche 1 oder 2, **dadurch gekennzeichnet, dass** die Schiebebüchsen (4, 5) unterschiedlich lange Schiebhubebewegungen ausführen.

4. Zange (1) nach einem der Ansprüche 1 bis 3, **dadurch gekennzeichnet, dass** an der Schiebebüchse (4, 5) Kurvenrollen (20) angeordnet sind, wobei die erzeugte Kraft der Steuerkurve (11) auf die Kurvenrollen (20) die Schiebehubbewegung der Schiebebüchse (4, 5) verursacht.

5. Zange (1) nach einem der Ansprüche 1 bis 4, **dadurch gekennzeichnet, dass** an den Schiebebüchsen (4, 5) Stützrollen (29) angeordnet sind.

6. Zange (1) nach der vorangehenden Ansprüche 1 bis 5, **dadurch gekennzeichnet, dass** die Zange einen Lagerbock (14) aufweist, wobei der Lagerbock (14) zur Lagerung des Gehäuses (2) dient.

7. Zange (1) nach Anspruch 6, **dadurch gekennzeichnet, dass** der Lagerbock (14) einen Aufnahmebereich (18) zum Anschliessend des Antriebs aufweist.

8. Zange (1) nach einem der Ansprüche 6 oder 7, **dadurch gekennzeichnet, dass** der Lagerbock (14) einen Anschlag (22) aufweist um die Hubbewegung zu begrenzen.

9. Zange (1) nach einem der vorangehenden Ansprüche, **dadurch gekennzeichnet, dass** die Zange (1) eine Achse (9) aufweist, die die Pleuel (10) gelenkig miteinander verbindet.

10. Zange (1) nach einem der vorangehenden Ansprüche, **dadurch gekennzeichnet, dass** die Zange (1) ein Sicherungselement (24) aufweist, um ein Öffnen der Zange (1) während des Montagevorgangs der Klemmverbindung mit dem Rohr zu verhindern und das Rohr so stark zu geklemmt, dass ein rausschieben des Rohres verhindert wird.

11. Zange (1) nach einem der vorangehenden Ansprüche, **dadurch gekennzeichnet, dass** das Sicherungselement (24) an der Achse (9) angeordnet ist.
